(19) Europäisches Patentamt
European Patent Office
Office européen des brevets

(11) Publication number: **0 123 312**
**A2**

(12) # EUROPEAN PATENT APPLICATION

(21) Application number: 84104596.6

(22) Date of filing: 24.04.84

(51) Int. Cl.³: F 16 D 69/02
D 21 H 5/00

(30) Priority: 25.04.83 US 488559

(43) Date of publication of application:
31.10.84 Bulletin 84/44

(84) Designated Contracting States:
DE FR GB SE

(71) Applicant: BORG-WARNER CORPORATION
200 South Michigan Avenue
Chicago Illinois 60604(US)

(72) Inventor: Okubo, Howard S.
4125 North Keystone
Chicago Illinois 60641(US)

(72) Inventor: Heinrich, George Morgan
7 South Quincy Street
Hinsdale Illinois 60521(US)

(72) Inventor: Stallings, Edward Sykes
153 S. 18th Avenue
Maywood Illinois 60153(US)

(74) Representative: Vossius Vossius Tauchner Heunemann Rauh
Siebertstrasse 4 P.O. Box 86 07 67
D-8000 München 86(DE)

(54) **Process for making dry friction material.**

(57) A process for preparing a paper friction material and the paper friction material thus prepared. The paper friction material is suitable for use in a dry environment. The process is carried out on a paper-making machine such as a Fourdrinier machine. The furnish comprises aromatic polyamide fibers, chopped glass fibers and fillers. The paper product is impregnated with a curable resin.

EP 0 123 312 A2

VOSSIUS · VOSSIUS · TAUCHNER
HEUNEMANN · RAUH
PATENTANWÄLTE
SIEBERTSTR. 4 · 8000 MÜNCHEN 80
TEL. (089) 47 40 75

# PROCESS FOR MAKING DRY FRICTION MATERIAL

## Description

The present invention relates generally to friction materials and, more particularly, to such friction materials as are especially useful in dry environments. Still more particularly, it relates to a process for making such friction materials.

The friction materials herein are useful in clutch assemblies, particularly where these are used in dry environments. A clutch assembly comprises a splined clutch mounting member to which is attached a friction facing. The means of attachment may be by riveting or cementing. Clutch facings may be made in any of several ways. Thus, in the so-called dry process the several ingredients, including a partially cured thermosetting resin, are mixed and then placed in a shallow mold and heated under a low pressure so as to cause the resin to flow but not to fully cure it. The resulting flat sheet is removed from the mold and cut into the desired arcuate shape. This flat, arcuate section is then reheated to soften and reset the resin in a cold mold to the desired clutch-facing shape. The resin is then cured to its thermoset and permanent condition.

In the roll-forming process the ingredients are mixed with a solvent and a wet binder such as resin, oil, rubber, etc. The resulting slightly tacky grannules are fed into the nip of two form rollers which compress the mixture into a continuous tape. The tape is finish-cured to shape in confining molds.

The woven process involves the preparation of an asbestos-cotton yarn which is passed through a dip tank containing a fluid mixture of various binders

and fillers. The impregnated yarn is cured to a B stage, then converted to a preform as in U.S. 2,263,500 and the preform molded to the desired configuration at elevated temperatures and pressures.

Still another method involves the preparation of a friction paper, prepared with or without a binder, on a paper-making machine such as a Fourdrinier machine. The various fibrous components and fillers, with or without a binder are deposited from a very dilute aqueous slurry onto the Fourdrinier wire. The resulting paper product, if it does not already contain a binder resin, is impregnated with one, then cured. Such paper friction materials have ordinarily been utilized as clutch facing materials only for use in wet environments, e.g., in automatic transmissions.

U.S. 4,279,696 (Piersol) shows the formation of a friction material on a Fourdrinier machine. The paper product contains cellulose fibers, metal fibers, a resin, rubber and inorganic fillers.

U.S. 4,256,801 (Chuluda) also shows the formation of a friction material on a Fourdrinier machine. The friction material comprises a mixture of cellulose (cotton) fibers, carbon fibers, flame-resistant organic fibers and, optionally, graphite particles and diatomaceous earth particles. The paper product is said to be useful in clutches, bands, brakes and the like operating in oil.

U.S. 4,045,608 (Todd et al.) also deals with friction materials which are used with clutch plates, automatic transmissions and bands, all of which provide a fluid environment. The friction materials are paper-like and are made on a paper-making machine. The composition of the friction material comprises cellulose fibers, an

inorganic absorbent filler and a retention agent to hold everything together, a first coating of a resin binder impregnant and a second outer coating of an ethyl silicate binder impregnant.

The invention of the present application is a process for making a paper friction material suitable for use as a friction facing in a clutch or brake assembly in a dry environment comprising forming an aqueous slurry containing aromatic polyamide fibers, chopped glass fibers and fillers, preparing a paper product on a paper-making apparatus from such aqueous slurry, impregnating said paper product with a curable thermosetting resin and curing the resin-impregnated paper product.

The aromatic polyamide fibers, commonly known as aramids, are commercially available in various forms, e.g., yarn, pulp, etc. identified by the trademarks "Fiber B," "Kevlar," "DP-01," "Nomex," and others. Aramid is a generic expression denoting fibers made from the condensation product of isophthalic or terephthalic acids and m- or p-pehnylenediamine. "Fiber B®" and "Kevlar®" are generally understood to identify products of the condensation of terephthalic acid and p-phenylenediamine, while "Nomex"® is understood to identify the condensation product of isophthalic acid and m-phenylenediamine. The term aramid has been defined as a manufactured fiber in which the fiber-forming substance is a long-chain synthetic aromatic polyamide in which at least 85% of the amide linkages are attached directly to two aromatic linkages. More information is contained in U.S. 3,393,210 which is incorporated herein by reference. The aramid prepared from terephthalic acid and p-phenylenediamine is preferred.

The aramid fibers preferably are in pulp form, i.e., they are very short and highly fibrillated. The fiber length is within the range of from 0.2 to 12 mm, preferably within the range of from 1-6 mm.

The amount of aromatic polyamide fiber which should be used in the friction compositions herein ranges from about 1% to about 12% based on the weight of the uncured composition. Preferably, the amount is between about 2% and 10%.

The glass fibers useful in the practice of the invention are those typically utilized for reinforcing cured resinous materials. The glass fiber surface is treated with a sizing composition to permit bonding of the glass surface to the matrix of the friction element.

The sizing composition and its application to the individual glass filaments is described in U.S. 4,130,537 (Bohrer), incorporated herein by reference. The sized fibers may be coated with a resinous material to give a so-called "RFL-coated" glass fiber. These also are described in the Bohrer patent, but the preferred glass fibers herein are plain, chopped glass fibers.

The physical form of the glass fibers in an important and critical element of the invention. It must be in the form of chopped strands, preferably from about 2.54 to about 25.4 mm in length.

The amount of glass fibers in the friction composition herein should be from about 2% to about 15%, preferably from about 3% to about 12%, based on the weight of the uncured composition.

Fillers are for the most part inorganic materials. They include diatomaceous earth, metal

powders, graphite, alumina, mineral wool; aluminum silicate or quartz fibers, barium sulfate, calcium carbonate, zinc oxide paper filler clay, antimony sulfide, antimony oxide, wollastonite, cryolite, copper oxide, rottenstone, barytes, cardolite, natural rubber, and mica.

The process of the present invention may be carried out in a conventional water-laid paper-making machine such as a Fourdrinier paper-making machine or a rotoformer screen. The various ingredients, i.e., the aromatic polyamide fibers, chopped glass fibers and fillers, are dispersed in water to form a very dilute slurry having a concentration of from about 5 to about 10% solids (by weight). This slurry is introduced, for example, to the head box of a Fourdrinier machine and thence onto machines endless open mesh belt to a depth of from about 12.7 to about 25.4 mm to insure a sufficiently thick paper product. This final product is passed through an oven or drum dryers at elevated temperatures to remove the last traces of water.

As noted earlier herein the friction paper materials are useful in a dry environment. In such use their wear characteristics are especially important and this requirement in turn makes the thickness of the paper an important factor. The friction papers which result from the process of this invention are at least about 1.52 mm thick and may range up to as high as 7.62 mm in thickness. In most instances they are from about 2.54 mm to about 5.08 mm thick. The thicker papers, i.e. those having a thickness of from about 0.51 mm to about 7.62 mm are best prepared on a rotoformer screen whereas the papers of lesser thickness can be prepared conveniently on a Fourdrinier machine.

The friction papers herein may be laminated to provide two or more thicknesses, if desired.

The dried paper product is treated wth a curable resin so as to impregnate the paper product thoroughly. Resins which are suitable for such use include polyurethane resins, melamine formaldehyde resins, melamine aldihyde resins, silicone resins, phenolic resins and modified phenolic resins.

The polyurethane resins usable for products of the invention are a combination of condensation products of polyesters and isocyanate compounds containing two or three -NCO- groups. The condensation products of polyesters are made, for instance, of adipic acid and triols like glycerin, hexane triols, trimethylol propane and diols like butylene glycol of phthalic acid and xylene formalkehyde. The isocyanate compounds used contain two or three -NCO- groups. Such isocyanates are phenyl disocyanate, p,p'-diphenylmethane diisocyanate, tolylene diisocyanate, and triphenyl methane triisocyanate.

The polyesters chosen shall be of such a nature that the final combination product with the isocyanate shall be medium to hard.

The preferred embodiment of polyurethane resins is, for example, a 1:1 condensation mixture of Multron® R4 which is a polyester made from 2 1/2 mols adipic acid, 0.5 mol phthalic acid and 4 mols triol; and Mondur® C (Desmodur® TH) which has the following chemical composition:

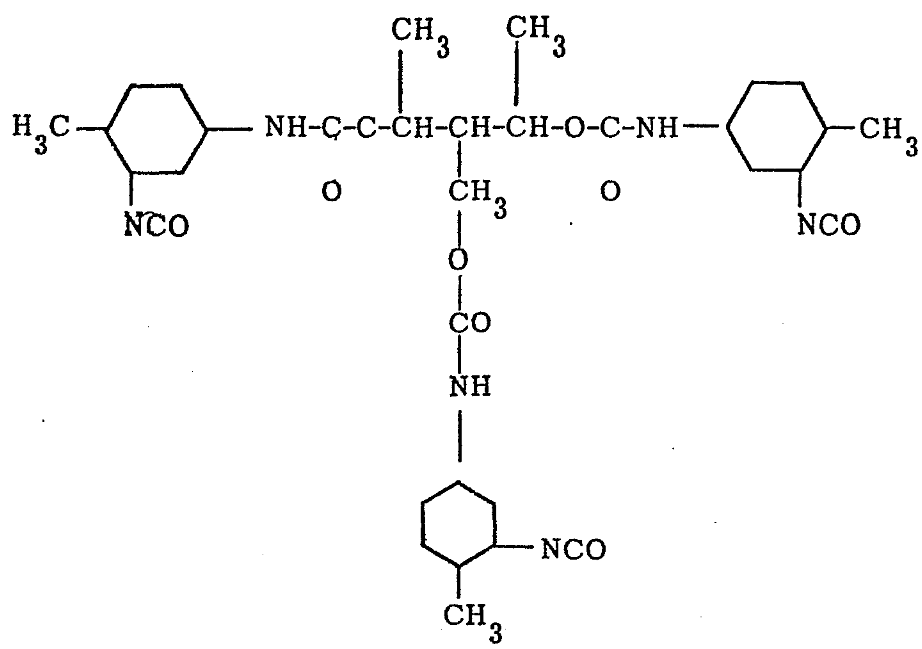

Usable melamine formaldehyde resins are obtained, for instance, by reacting approximately 2-3 mols of formaldehyde per mol of melamine.

A spray dried melamine formaldehyde resin is prepared by spray drying a syrup obtained by reacting 2 mols of formaldehyde with each mol of melamine.

The melamine formaldehyde resin is dissolved and used in solvent mixture of, for instance, 50% ethyl alcohol and 50% water.

Phenolic and modified phenolic resins found to be useful in our investigation were of the following nature:

One-step phenol-formaldehyde alkaline catalyzed resoles; one or two-step phenol-formaldehyde resins, ammonia or hexamethylene tetramine catalyzed of the novolac and resole type; oil soluble heat reactive resin of the resole type; phenol, cresol, alkylphenol, formaldehyde resins; phenol-aniline formaldehyde resins; and phenol-formaldehyde cashew nut shell liquid resins.

The paper may also contain other components in order to further improve the desirable properties of the paper. Thus, the paper may contain from about 1% to about 10%, based on the weight of the paper of a binder in order to increase the strength of the paper. The binder may be an elastomeric compound or a resinous compound. Typical elastomeric compounds include chlorinated rubber, and synthetic rubbers, such as neoprene (polychloroprene) and butadiene-acrylonitrile copolymers sold under the trade name of Hycar. Suitable resinous binders include nylon; polyacrylic resins, such as polymethacrylate and polymethylmethacrylate; and polyvinyl acetate. The preferred binders are neoprene latex and butadiene-acrylonitrile rubber latex. The binders can be incorporated into the paper either by sizing the stock, i.e., adding the binder solutions or emulsions to the stock and flocculating the same, or by spray methods or the use of a size press.

The resin is incorporated into the dried paper product by impregnating the paper with a resin solution or emulsion. From about 15% to about 60%, and preferably from about 25% to about 50% of the resin powder may be added, this percentage being based on the weight of the paper. The usual method of accomplishing this impregnation is to pass the paper through an alcoholic solution of the resin at such concentration as to achieve the desired resin pickup in the paper. The saturated paper, in a preferred instance then is cured sufficiently, i.e., advance cured, to eliminate tack from the paper. The paper may first be cut into a desired shape, e.g., that of a clutch friction facing, and then impregnated with a resin as above and advance cured.

In either instance, i.e., whether cut first or impregnated first, the paper may be laminated to form a thicker, long-wearing friction body. Lamination may be accomplished by heating at a temperature of from about 93.3°C (200°F) to about 204.4°C (400°F), e.g., under 71.3 kg/cm$^2$ - 211.9 kg/cm$^2$, i.e. 1000 psig - 3000 psig) to further cure the resin and adhere the surfaces of the two (or more) laminates.

Ordinarily the impregnating resin solution will be a solution in denatured alcohol, methanol, acetone or the like.

A typical paper friction material, illustrative of the invention herein, may be prepared from a formulation as follows:

| | Parts |
|---|---|
| Aromatic polyamide filler pulp | 5.8 |
| Chopped glass fiber (6.35 mm) | 9.7 |
| Cryolite | 7.8 |
| Antimony oxide | 7.8 |
| Wollastonite | 24.3 |
| Copper oxide | 16.5 |
| Coke flour | 4.9 |
| CNSL friction particles | 21.4 |
| Natural rubber latex | 1.9 |

The above composition is converted to a paper product on a Fourdrinier machine, then impregnated with a curable thermosetting resin by passing the paper through a 35% solution of a phenolic resin in denatured ethanol. The paper thus impregnated is

dried leaving deposited resin amounting to 30% of the weight of the non-impregnated paper. The impregnated paper is advance-cured so as to render it non-tacky, then cut into arcuate shapes. These cut-out shapes are arranged into two layers forming a cylindrical preform having an inside and outside diameter, then cured at 176,7 °C and 141.63 $kg/cm^2$ (2000 psig).

All parts and percentages herein, unless otherwise specifically states are by weight.

CLAIMS

1. A process for making a paper friction material suitable for use as a friction facing in a clutch or brake assembly in a dry environment comprising forming an aqueous slurry containing aromatic polyamide fibers, chopped glass fibers and fillers, preparing a paper product on a paper-making apparatus from such aqueous slurry, impregnating said paper product with a curable resin, and curing the resin-impregnated paper product.

2. The process of Claim 1 wherein the aromatic polyamide fibers are in pulp form.

3. The process of Claim 1 wherein the chopped glass fibers are chopped strands having an average length of from about 2.54 to about 25.4 mm.

4. The process of Claim 1 wherein the paper-making apparatus is a Fourdrinier machine.

5. The process of Claim 1 wherein the curable resin is a thermosetting phenolic resin.

6. The process of Claim 1 wherein the curing step is carried out by heating the impregnated paper product under pressure.

7. The process of claim 1 wherein the curing step is carried out by heating the inpregnated paper product at a temperature of from about 93.3°C (200°F) to about 204.4 °C (400°F) under a pressure of from about 71.3 $kg/cm^2$ to about 211.9 $kg/cm^2$(1000 psig to 300 psig).

8. The process of Claim 1 wherein the step of preparing the paper product is carried out so to form a paper product having a thickness of at least about 1.52 mm (0.06").

9. The process of Claim 1 wherein the step of impregnating the paper product is carried out so as to incorporate from about 15% to about 60% of curable binder in the impregnated product.

10. The paper friction material of any of claims 1 and 2.

11. A clutch or brake assembly containing the paper friction material of claim 10 as a friction facing.